# Europäisches Patentamt
# European Patent Office
# Office européen des brevets

(19)

(11) Veröffentlichungsnummer: **0 191 160**
**B1**

(12) **EUROPÄISCHE PATENTSCHRIFT**

(45) Veröffentlichungstag der Patentschrift:
31.05.89

(51) Int. Cl.⁴: **F 16 J 15/32**

(21) Anmeldenummer: **85114966.6**

(22) Anmeldetag: **26.11.85**

(54) Dichtungseinrichtung.

(30) Priorität: **14.02.85 DE 3505046**

(43) Veröffentlichungstag der Anmeldung:
**20.08.86 Patentblatt 86/34**

(45) Bekanntmachung des Hinweises auf die Patenterteilung:
**31.05.89 Patentblatt 89/22**

(84) Benannte Vertragsstaaten:
**DE FR GB IT**

(56) Entgegenhaltungen:
**DE-A-3 043 871**
**GB-A-791 607**
**GB-A-1 142 857**
**US-A-2 747 611**
**US-A-3 199 540**
**US-A-3 990 711**
**US-A-4 154 426**

(73) Patentinhaber: **WABCO Westinghouse Steuerungstechnik GmbH & Co., Bartweg 13 Postfach 91 12 70, D-3000 Hannover 91 (DE)**

(72) Erfinder: **Brausfeld, Walter, Dipl.- Ing., Hannoversche Strasse 101, D-3000 Hannover 61 (DE)**
Erfinder: **Meyer, Ernst- August, Ing. grad., Auf dem Kampe 18, D-3201 Algermissen (DE)**

(74) Vertreter: **Schrödter, Manfred, WABCO Westinghouse Fahrzeugbremsen GmbH Am Lindener Hafen 21 Postfach 91 12 80, D-3000 Hannover 91 (DE)**

EP 0 191 160 B1

**Beschreibung**

Die Erfindung betrifft eine Dichtungseinrichtung, welche in eine Ausnehmung eines Gehäuses einsetzbar ist, um eine Dichtung zwischen wenigstens zwei Kammern zu bewirken, die von dem Gehäuse und einem in der Ausnehmung bewegbaren Teil gebildet werden, gemäß dem Oberbegriff des Patentanspruchs 1.

Eine derartige Dichtungseinrichtung ist aus der DE-A-1 425 580 bekannt.

Diese Dichtungseinrichtung setzt sich aus einem ersten Dichtring und einem zweiten Dichtring zusammen, welche koaxial zueinander angeordnet sind. Zwischen den beiden Dichtringen ist ein als Stützring für die beiden Dichtringe dienendes Verbindungsstück vorgesehen, welches mit den Dichtringen verbunden ist. Die mit dem Stützring verbundenen Dichtringe werden von ringförmigen Halteelementen, welche zusätzlich die Funktion von Distanzstücken haben, in der Gehäusebohrung eines Ventilgehäuses gehalten. Der Stützring und die Halteelemente sind so ausgebildet und so zueinander angeordnet, daß die einander zugewandten Stirnflächen der Halteelemente mit einem Teil ihrer Fläche an je einer Seite des Stützringes anliegen, so daß der Stützring zwischen den Halteelementen liegt und von diesen gehalten wird. Die Stützringe und Halteelemente sind bezüglich ihrer axialen Erstreckung so bemessen, daß sie von den die Gehäusebohrung verschließenden Deckeln in ihrer Lage gehalten werden.

Diese bekannte Dichtungseinrichtung hat gegenüber Dichtungseinrichtungen, bei denen die Dichtringe nicht miteinander und nicht mit dem Stützring verbunden sind, den Vorteil, daß die Dichtringe beim Vorbeiführen eines in der Gehäusebohrung bewegbar angeordneten Teiles, wie z. B. eines Ventilschiebers, keine Drallerscheinung zeigen und nicht aus ihrer Nut herausgerissen werden.

Bei der Montage und bezüglich ihrer Herstellung weist diese Dichtungseinrichtung jedoch verschiedene Nachteile auf. Die einzelnen Teile der Dichtungseinrichtung, wie Dichtringe mit Stützring und Halteelemente müssen einzeln in die Gehäusebohrung eingelegt werden. Es müssen enge Toleranzen eingehalten werden, um axiales Spiel der Dichtungseinrichtung in der Gehäusebohrung zu vermeiden. Die Verbundteile - Dichtringe mit den als Stützringe dienenden Verbindungsstücken - sind aufwendig in ihrer Herstellung und teuer.

Der Erfindung liegt deshalb die Aufgabe zugrunde, eine Dichtungseinrichtung der eingangs genannten Art zu schaffen, die einfach im Aufbau ist und sich leicht montieren läßt.

Diese Aufgabe wird mit der im Patentanspruch 1 angegebenen Erfindung gelöst. Weiterbildungen und vorteilhafte Ausgestaltungen der Erfindung sind in den Unteransprüchen angegeben.

Die Erfindung bietet insbesondere den Vorteil, daß bei der Montage das Verbindungsstück von den z. B. als Nietstifte ausgebildeten Verbindungselementen durchstoßen werden kann, wobei der Randbereich der so geschaffenen Durchgangsöffnungen in dem Verbindungsstück dichtend jeweils an den Verbindungselementen anliegt. Die Halteelemente und die Dichtringe werden auf diese Art und Weise zu einer eine Dichtpatrone bildenden Baueinheit zusammengefaßt. Diese Dichtpatrone wird bei der Montage in die Gehäuseausnehmung, z. B. eines Ventilgehäuses, eingesetzt. Die einzelnen Bauteile können sich bedingt durch die Verbindung mittels der Nietstifte nicht mehr gegeneinander verschieben. Da das z. B. als Ringscheibe ausgebildete Verbindungsstück für die beiden Dichtringe aus einem relativ leicht zu durchstoßenden elastischen Material besteht, ist es nicht erforderlich, die Durchlässe für die Verbindungselemente in einem separaten Arbeitsgang zu schaffen. Es ist auch nicht notwendig, bei der Montage die durch das Verbindungsstück miteinander verbundenen Dichtringe besonders zu den Halteelementen auszurichten, da das Verbindungsstück an jeder beliebigen Stelle mittels der Nietstifte durchstoßen werden kann.

Das Verbindungsstück besteht vorteilhafterweise aus dem gleichen Material wie die Dichtringe und ist so dünn ausgebildet, daß keine Erhöhung der radialen Pressung durch axiale Vorspannung erzeugt wird, die Dichtringe jedoch sicher gehalten werden. Ein spezieller Stützring für die Dichtelemente wird nicht benötigt, da die Dichtringe in Nuten liegen, die von den Vorsprüngen der Halteelemente gebildet werden. Das Verbindungsstück verhindert ein Verdrillen und auch ein Austreten der Dichtringe aus den Nuten.

Sowohl aus der US-A-2 747 611 als auch aus der UA-A-3 990 711 sind Dichtungseinrichtungen mit zwei koaxial zueinander angeordneten Dichtringen bekannt, wobei die beiden Dichtringe mittels eines stegartigen Verbindungsstückes aus einem elastischen Material miteinander verbunden sind.

Jedoch werden bei diesen bekannten Dichtungseinrichtungen die Dichtringe nicht mittels in ein Gehäuse einsetzbarer Halteelemente gehalten sondern werden dadurch im Gehäuse fixiert, daß einer der beiden Dichtringe der Dichtungseinrichtung in einer zwischen einzelnen Gehäuseteilen vorgesehenen nutartigen Ausnehmung gehalten wird.

Die nutartige Ausnehmung ist in der Wand der aneinander anliegenden Stirnseiten von je zwei Gehäuseteilen vorgesehen und so ausgebildet, daß sie von zwei axialen Vorsprüngen begrenzt wird, die sich auf die einander abgewandten Seiten des stegartigen Verbindungsstückes der beiden Dichtringe zu erstrecken und dieses praktisch zwischen sich einklemmen.

Eine Veränderung der Anzahl der Dichtungen oder eine Veränderung des Abstandes der Dichtungen zueinander ist nicht möglich, da die Lagerstellen für die Dichtungen durch die nutartigen Ausnehmungen in den Gehäuseteilen vorgegeben sind.

Auch ist eine Vormontage der Dichtungen zu einer Dichtungspatrone nicht möglich, da wie bereits erwähnt, im Gehäuse keine lösbaren Halteelemente für die Dichtringe vorgesehen sind.

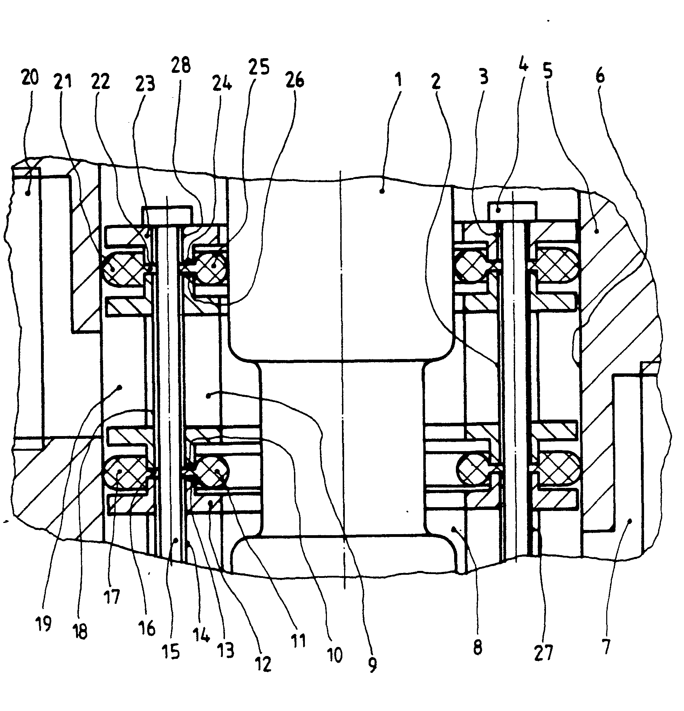

Anhand der Abbildung wird nachstehend ein Ausführungsbeispiel der Erfindung näher erläutert.

Die Abbildung zeigt einen Ausschnitt eines Schieberventils mit einer als Dichtungspatrone ausgebildeten Dichtungseinrichtung.

In einem Ventilgehäuse 5 mit einem Druckmitteleingang 7 und einem Druckmittelausgang 20 ist eine Gehäusebohrung 6 zur Aufnahme eines Ventilschiebers 1 und einer zwischen der Wandung der Gehäusebohrung 6 und dem Ventilschieber 1 angeordnete Dichtungseinrichtung vorgesehen. In der Abbildung nimmt der Ventilschieber 1 eine Stellung ein, in welcher eine mit dem Druckmitteleingang 7 verbundene Eingangskammer 8 mit einer mit dem Druckmittelausgang 20 verbundenen Ausgangskammer 19 verbunden ist.

Die Dichtungseinrichtung setzt sich aus jeweils einem ersten Dichtring 11 bzw. 25 und einem koaxial zu diesem angeordneten zweiten Dichtring 17 bzw. 21 und drei ringförmigen Halteelementen 12, 9 und 23 zusammen. Der erste Dichtring 11 bzw. 25 und der zweite Dichtring 17 bzw. 21 sind mittels eines vorzugsweise als Membran ausgebildeten ringförmigen Verbindungsstückes 16 bzw. 22 fest miteinander verbunden und bilden so eine Doppeldichtung 11, 17, 16 bzw. 25, 21, 22. Das erste Halteelement 12 weist auf seiner der ersten Doppeldichtung 11, 17, 16 zugewandten Seite einen umlaufenden Vorsprung 13 auf, dessen Stirnfläche so bemessen ist, daß sie sich mit der Ringfläche des Verbindungsstückes 16 der ersten Doppeldichtung 11, 17, 16 deckt. Es ist jedoch auch möglich, die Vorsprünge schmaler auszubilden als die Ringflächen der Verbindungsstücke, so daß nicht die gesamte Breite der Ringflächen der Verbindungsstücke von den Stirnflächen der Vorsprünge abgestützt werden. Hierdurch wird eine größere Beweglichkeit der Dichtringe erzielt. Das dem ersten Halteelement 12 gegenüberliegende zweite Halteelement 9 besitzt auf seiner der ersten Doppeldichtung 11, 17, 16 zugewandten Seite ebenfalls einen umlaufenden Vorsprung 10, dessen Stirnfläche so bemessen ist, daß sie sich mit der Ringfläche des Verbindungsstückes 16 deckt. An der der ersten Doppeldichtung 11, 17, 16 abgewandten Seite des zweiten Halteelementes 9 ist ein weiterer umlaufender Vorsprung 26 vorgesehen, auf welchem die zweite Doppeldichtung 25, 21, 22 mit ihrem Verbindungsstück 22 aufliegt. Das dritte Halteelement 23 ist zweiten Halteelement 9 gegenüberliegend auf der anderen Seite der zweiten Doppeldichtung 25, 21, 22 angeordnet und liegt mit der Stirnfläche eines sich auf die zweite Doppeldichtung 25, 21, 22 zu erstreckenden umlaufenden Vorsprunges 24 auf dem Verbindungsstück 22 der zweiten Doppeldichtung 25, 21, 22 auf. Durch die an den Halteelementen 12, 9, 23 vorgesehenen Vorsprünge 13, 10, 26, 24 ergeben sich Abstufungen, die beim Verbinden der Halteelemente 12, 9, 23 miteinander und mit den Doppeldichtungen 11, 17, 16 bzw. 25, 21, 22 Nuten zur Lagerung der Dichtringe 11, 17, 25, 21 der Doppeldichtungen 11, 17, 16 bzw. 25, 21, 22 bilden.

Die Halteelemente 12, 9, 23 weisen in Richtung ihrer Längsachse verlaufende Durchlässe 14, 18, 28, 3, 2, 27 auf, durch welche z. B. als Nietstifte ausgebildete Verbindungselemente 15, 4 hindurchgeführt sind. Die in den Verbindungsstücken 16, 22 der Doppeldichtungen 11, 17, 16 und 25, 21, 22 erforderlichen Durchlässe zum Durchführen der Nietstifte 15, 4 werden nicht in einem separaten Arbeitsgang, sondern beim Einführen der Nietstifte 15, 4 in die Durchlässe 14, 18, 28, 3, 2, 27 der Halteelemente 12, 9, 23 von den Nietstiften 15, 4 geschaffen. Der die Durchlässe begrenzende Randbereich der Verbindungsstücke 16, 22 legt sich dabei dichtend an die Nietstifte 15, 4 an.

Die Dichtungseinrichtung kann aus beliebig vielen Doppeldichtungen und Halteelementen bestehen. In ihrer einfachsten Ausführungsform setzt sich die Dichtungseinrichtung aus zwei Halteelementen und einer Doppeldichtung zusammen. Als Verbindungselement können auch Schnappeinrichtungen dienen, die z. B. aus einem an einem Halteelement vorgesehenen Steckerteil und einer in dem anderen Halteelement vorgesehenen entsprechenden Aufnahme für das Steckerteil bestehen. Das Steckerteil muß dabei scharfkantig ausgebildet sein, um beim Zusammenfügen der Halteelemente das Verbindungsstück der Doppeldichtung durchstoßen zu können.

An den Stirnflächen der Vorsprünge 13, 10, 26, 24 der Halteelemente 12, 9, 23 können in Umfangsrichtung verlaufende Dichtungsvorsprünge vorgesehen werden, die bei montierter Dichtungseinrichtung gegen das Verbindungsstück 16 bzw. 22 der Doppeldichtung 11, 17, 16 bzw. 25, 21, 22 gedrückt werden und so eine zusätzliche Abdichtung im Bereich der Durchlässe 14, 18, 28, 3, 2, 27 für die Verbindungselemente 15, 4 schaffen.

Bei einer solchen Ausführungsform der Halteelemente 12, 9, 23 ist es möglich, für die in den Verbindungsstücken 16, 22 vorgesehenen Durchführungen für die Verbindungselemente 15, 4 einen Durchmesser zu wählen, der kleiner oder größer ist als der Durchmesser der Verbindungselemente 15, 4. Die Halteelemente können, wie im Vorstehenden bereits beschrieben, ringförmig ausgebildet sein, können aber auch aus einzelnen Segmenten bestehen, die ringförmig angeordnet sind.

## Patentansprüche

1. Dichtungseinrichtung, welche in eine Ausnehmung (6) eines Gehäuses (5) einsetzbar ist, um eine Dichtung zwischen wenigstens zwei Kammern zu bewirken, die von dem Gehäuse (5) und einem in der Ausnehmung (6) bewegbaren Teil (1) gebildet werden, mit folgenden Merkmalen:

a)  Es sind ein erster Dichtring (11) bzw. (25) und ein zweiter Dichtring (17) bzw. (21) vorgesehen, welche koaxial zueinander und koaxial zur Gehäuseausnehmung (6) angeordnet sind;

b)  der erste Dichtring (11) bzw. (25) und der zweite Dichtring (17) bzw. (21) sind durch ein ringförmiges Verbindungsstück (16) bzw. (22) miteinander verbunden;

c)  die beiden Dichtringe (11, 25) und (17, 21) werden von Halteelementen (12, 9, 23), die vorzugsweise ringförmig ausgebildet sind, in der Gehäuseausnehmung (6) fixiert, wobei die Halteelemente (12, 9, 23) je wenigstens mit einer Teilfläche ihrer einander zugewandten Stirnseiten an einer Seite des zwischen den Halteelementen (12, 9, 23) angeordneten Verbindungsstückes (16) bzw. (22) der Dichtringe (11, 25) und (17, 21) anliegen;
   gekennzeichnet durch die folgenden Merkmale:

d)  Das verbindungsstück (16) bzw. (22) besteht aus einem elastischen Material;

e)  das Verbindungsstück (16) bzw. (22) ist in Richtung der Mittelachse der Ausnehmung (6) dünner ausgebildet als die Dichtringe (11, 17, 25, 21);

f)  es sind Mittel (15) bzw. (4) zur Verbindung der Halteelemente (12, 9, 23) miteinander und mit dem Verbindungsstück (16) bzw. (22) vorgesehen, die durch das Verbindungsstück (16) bzw. (22) hindurchgeführt sind.

2. Dichtungseinrichtung nach Anspruch 1, dadurch gekennzeichnet, daß die Mittel zur Verbindung der Halteelemente (12, 9, 23) miteinander und mit dem Verbindungsstück (16, 22) als Nietstifte (15, 4) ausgebildet sind.

3. Dichtungseinrichtung nach Anspruch 1, dadurch gekennzeichnet, daß das Verbindungsstück (16, 22) für die beiden Dichtringe (11, 17, 25, 21) als Membran ausgebildet ist.

4. Verbindungsstück für eine Dichtungseinrichtung nach Anspruch 1, dadurch gekennzeichnet, daß das zwischen den Dichtringen (11, 17, 25, 21) liegende Teilstück des Verbindungsstückes (16, 22) vor der Montage der Dichtungseinrichtung keine Durchgangsöffnungen für die Mittel zur Verbindung der Halteelemente (12, 9, 23) oder nur solche entsprechenden Durchgangsöffnungen aufweist, deren Durchmesser kleiner ist als der Durchmesser der Verbindungselemente (15, 4).

5. Halteelement für eine Dichtungseinrichtung nach Anspruch 1, dadurch gekennzeichnet, daß jedes Halteelement (12, 9, 23) auf seiner dem Verbindungsstück (16, 22) zugewandten Seite einen umlaufenden Vorsprung (13, 10, 26, 24) aufweist, welcher am Verbindungsstück (16, 22) anliegt, wobei die Vorsprünge (13, 10, 26, 24) von jeweils zwei Halteelementen (12, 9, 23) den Nutgrund einer Nut zur Aufnahme der Dichtringe (11, 17, 25, 21) bilden.

6. Dichtungseinrichtung nach Anspruch 1, dadurch gekennzeichnet, daß die Mittel zur Verbindung der Halteelemente (12, 9, 23) miteinander und mit dem Verbindungsstück (16, 22) aus jeweils an dem einen Halteelement angeordneten Steckerteilen und an dem jeweils anderen Halteelement vorgesehenen entsprechenden Aufnahmen für die Steckerteile bestehen.

7. Halteelement für eine Dichtungseinrichtung nach Anspruch 1, dadurch gekennzeichnet, daß an den Teilflächen der Stirnseiten der Halteelemente (12, 9, 23) in Umfangsrichtung verlaufende Dichtungsvorsprünge angeordnet sind, die an dem Verbindungsstück (16, 22) dichtend anliegen.

## Claims

1. Sealing device that can be inserted into a recess (6) in a housing (5) in order to effect a seal between at least two chambers that are formed by the housing (5) and a component (1) that is movable in the recess (6), having the following features:

a)  a first sealing ring (11 or 25) and a second sealing ring (17 or 21) are provided which are arranged coaxially with respect to one another and coaxially with respect to the recess (6) in the housing;

b)  the first sealing ring (11 or 25) and the second sealing ring (17 or 21) are connected to one another by way of an annular connecting piece (16 or 22);

c)  the two sealing rings (11, 25) and (17, 21) are fixed in the recess (6) in the housing by retaining elements (12, 9, 23) which are preferably of annular construction, part of the surface of the facing end faces of each of the retaining elements (12, 9, 23) resting on one side of the connecting piece (16 or 22) of the sealing rings (11, 25) and (17, 21), which connecting piece is arranged between the retaining elements (12, 9, 23)
   characterised by the following features:

d)  the connecting piece (16 or 22) is made of a resilient material;

e) the connecting piece (16 or 22) is thinner in the direction of the central axis of the recess (6) than are the sealing rings (11, 17, 25, 21);

f) means (15 or 4) for connecting the retaining elements (12, 9, 23) to one another and to the connecting piece (16 or 22) are provided which pass through the connecting piece (16 or 22).

2. Sealing device according to claim 1, characterised in that the means for connecting the retaining elements (12, 9, 23) to one another and to the connecting piece (16, 22) are in the form of rivets (15, 4).

3. Sealing device according to claim 1, characterised in that the connecting piece (16, 22) for the two sealing rings (11, 17, 25, 21) is in the form of a diaphragm.

4. Connecting piece for a sealing device according to claim 1, characterised in that before the sealing device is assembled, the portion of the connecting piece (16, 22) lying between the sealing rings (11, 17, 25, 21) has no through openings for the means for connecting the retaining elements (12, 9, 23) or has only through openings of that type of a diameter smaller than the diameter of the connecting elements (15, 4).

5. Retaining element for a sealing device according to claim 1, characterised in that each retaining element (12, 9, 23) has on its side facing the connecting piece (16, 22) a circumferential projection (13, 10, 26, 24) which rests against the connecting piece (16, 22), the projections (13, 10, 26, 24) of each two retaining elements (12, 9, 23) forming the base of a groove for accommodating the sealing rings (11, 17, 25, 21).

6. Sealing device according to claim 1, characterised in that the means for connecting the retaining elements (12, 9, 23) to one another and to the connecting piece (16, 22) consist of plug-in portions on one retaining element, and corresponding sockets for the plug-in portions provided on the other retaining element.

7. Retaining element for a sealing device according to claim 1, characterised in that sealing projections, extending in a peripheral direction, that seal against the connecting piece (16, 22) are arranged on the part surfaces of the end faces of the retaining elements (12, 9, 23).

**Revendications**

1. Dispositif d'étanchéité que l'on peut introduire dans un évidement (6) d'un carter (5) pour réaliser une étanchéité entre au moins deux chambres qui sont formées par le carter (5) et par une pièce (1) mobile dans l'évidement (6), avec les caractéristiques suivantes:

a) Il est prévu une première bague d'étanchéité (11) ou (25) et une seconde bague d'étanchéité (17) ou (21) qui sont disposées coaxialement l'une à l'autre et coaxialement à l'évidement (6) du carter;

b) la première bague d'étanchéité (11) ou (25) et la seconde bague d'étanchéité (17) ou (21) sont réunies l'une à l'autre par une pièce de liaison annulaire (16) ou (22);

c) les deux bagues d'étanchéité (11, 25) et (17, 21) sont fixées dans l'évidement (6) du carter par des éléments de maintien (12, 9, 23) qui sont de préférence de forme annulaire, étant précisé que les éléments de maintien (12, 9, 23) appuient, respectivement, par au moins une surface partielle de leurs faces frontales tournées l'une vers l'autre, contre une face de la pièce de liaison (16) ou (22) des bagues d'étanchéité (11, 25) et (17, 21) disposée entre les éléments de maintien (12, 9, 23); <u>caractérisé par les caractéristiques suivantes:</u>

d) la pièce de liaison (16) ou (22) est constituée d'un matériau élastique;

e) la pièce de liaison (16) ou (22) est conçue plus mince, dans la direction de l'axe de l'évidement (6), que les bagues d'étanchéité (11, 17, 25, 21);

f) il est prévu, pour réunir les éléments de maintien (12, 9, 23) l'un à lautre et avec la pièce de liaison (16) ou (22), des moyens qui passent à travers la pièce de liaison (16) ou (22).

2. Dispositif d'étanchéité selon la revendication 1, caractérisé en ce que les moyens prévus pour réunir les éléments de maintien (12, 9, 23) l'un avec l'autre et avec la pièce de liaison (16, 22) sont conçus sous forme de chevilles rivées (15, 4).

3. Dispositif d'étanchéité selon la revendication 1, caractérisé en ce que la pièce de liaison (16, 22) prévue pour les deux bagues d'étanchéité (11, 17, 25, 21) est conçue sous forme de membrane.

4. Pièce de liaison pour un dispositif d'étanchéité selon la revendication 1, caractérisée en ce que la partie de la pièce de liaison (16, 22) située entre les bagues d'étanchéité (11, 17, 25, 21) ne présente, avant le montage du dispositif d'étanchéité, aucune ouverture de passage pour les moyens prévus pour réunir les éléments de maintien (12, 9, 23) ou ne présente que des ouvertures de passage correspondantes dont le diamètre est inférieur au diamètre des éléments de liaison (15, 4).

5. Elément de maintien pour un dispositif d'étanchéité selon la revendication 1, caractérisé en ce que, sur sa face tournée vers la pièce de liaison (16, 22), chaque élément de maintien (12, 9, 23) présente un embout périphérique continu (13, 10, 26, 24) qui appuie contre la pièce de liaison (16, 22), les embouts (13, 10, 26, 24) de, respectivement, deux éléments de maintien (12, 9, 23) formant le fond d'une rainure prévue pour recevoir les bagues d'étanchéité (11, 17, 25, 21).

6. Dispositif d'étanchéité selon la revendication 1, caractérisé en ce que les moyens prévus pour réunir les éléments de maintien (12, 9, 23) l'un avec l'autre et avec la pièce de liaison (16, 22) sont constitués de broches, respectivement disposées sur l'un des éléments de maintien, et de douilles correspondantes pour les broches, prévues sur, respectivement, l'autre élément de maintien.

7. Elément de maintien pour un dispositif d'étanchéité selon la revendication 1, caractérisé en ce que sur les surfaces partielles des faces frontales des éléments de maintien (12, 9, 23) sont disposés des embouts d'étanchéité qui courent dans la direction périphérique et s'appuient de façon étanche contre la pièce de liaison (16, 22).